# EUROPÄISCHE PATENTANMELDUNG

(11) **EP 3 061 870 A1**
(43) Veröffentlichungstag der Anmeldung: **31.08.2016**
(21) Anmeldenummer: 16157481.9
(22) Anmeldetag: 25.02.2016
(51) Int. Cl.: E02B 3/10, E04H 9/14, E06B 9/00

(54) **SYSTEM ZUM SCHUTZ VON OBJEKTEN GEGEN HOCHWASSER**

(30) Priorität: 26.02.2015 DE 102015102792
(71) Anmelder: Schweizer, Günter, 79238 Ehrenkirchen (DE)
(72) Erfinder: Schweizer, Günter, 79238 Ehrenkirchen (DE)
(74) Vertreter: Stürken, Joachim

(57) **Zusammenfassung**

Die vorliegende Erfindung betrifft allgemein das Gebiet des Schutzes von Objekten einschließlich Freiarrealen vor Hochwasser oder Überschwemmungen. Insbesondere betrifft die Erfindung ein System, mit dem sich beispielsweise Gebäude oder andere Objekte in kurzer Zeit wirksam gegen durch Hochwasser oder Überschwemmungen verursachte Schäden schützen lassen.

Hierzu umfasst das System einen flexiblen, aufblasbaren und länglich gestreckten Auftriebskörper (2), gegebenenfalls eine Schutzhülle (3) zur Aufnahme des Auftriebskörpers (2), und eine flexible, nicht aufblasbare Folie (4) oder Schutzplane (5), welche dem Auftriebskörper (2) als Vorlauf sowie gegebenenfalls als Schutzhülle (3) dient, wobei die funktionellen Elemente des Auftriebskörpers (2), der gegebenenfalls vorhandenen Schutzhülle (3) und der Folie (4) oder Schutzplane (5) keine Mittel zur Befestigung am Objekt (1) aufweisen und das System zur Bereitstellung des Schutzes keinerlei bauliche Veränderungen des zu schützenden Objektes (1) erfordert.

## Beschreibung

### Einleitung

Die vorliegende Erfindung betrifft allgemein das Gebiet des Schutzes von Objekten einschließlich Freiarrealen vor Hochwasser oder Überschwemmungen. Insbesondere betrifft die Erfindung ein mobiles System, mit dem sich beispielsweise Gebäude oder andere Objekte in kurzer Zeit wirksam gegen durch Hochwasser oder Überschwemmungen verursachte Schäden schützen lassen.

### Stand der Technik und Nachteile

Immer häufiger wird in der Presse über Wetterereignisse berichtet, die innerhalb kurzer Zeit große Mengen an Niederschlag oder Schmelzwasser mit sich bringen und insbesondere an Gebäuden gravierende Schäden verursachen. Vor dem Hintergrund der vom Weltklimarat für die Zukunft prognostizierten Verschärfung dieser Problematik ist damit zu rechnen, dass immer mehr Gebäude insbesondere in Gebieten, die für Überschwemmungen durch Hochwasser anfällig sind, wirksam gegen Wasserschäden geschützt werden müssen.

Bekannte Maßnahmen gegen einen vorübergehend erhöhten Wasserstand betreffen das Errichten von Schutzwänden oder -wällen aus Erdreich, Planken oder Sandsäcken. Diese temporär wirkenden Schutzmaßnahmen sind nicht nur zeitaufwendig zu realisieren, sondern bieten zumeist auch keinen wirksamen Schutz, da kleine Mengen an Wasser durchsickern können und stets die Gefahr einer Unterspülung der Schutzvorrichtungen besteht. Es sind daher zahlreiche Systeme entwickelt worden, um gegebenenfalls ganze Bauwerke schützen zu können, wobei einige davon flexibel an veränderte Hochwasserpegel anpassbar sind und im Bedarfsfall relativ schnell und einfach aufgebaut werden können.

Aus DE 20 2008 012 907 U1 ist ein System bekannt, bei dem ein Gebäude mittels einer Folie geschützt wird. Um das Gebäude verläuft ein spezieller Kanal, in welchem die Folie aufbewahrt wird und im Bedarfsfall am Gebäude hochgezogen sowie dort befestigt werden kann. Nachteilig an dieser Lehre neben der erforderlichen Schaffung eines Kanals ist, dass die Folie nur unter großem Aufwand am Gebäude hochgezogen und fixiert werden kann, wobei die Befestigung am Gebäude bauliche Veränderungen desselben erforderlich macht.

Ein ähnliches Hochwasserschutzsystem ist in EP 1 528 187 A1 offenbart. Ein Abschnitt der zum Schutz vorgeschlagenen Folie ist am wasserdichten Unterbau des Gebäudes permanent befestigt, während ein anderer Abschnitt im Bedarfsfall daran angeschlossen und am Gebäude befestigt wird. Nachteilig ist auch hier der hohe Aufwand bei der Anbringung und Befestigung der Folie am Gebäude.

Die Druckschrift DE 39 05 660 A1 offenbart eine Abdichtvorrichtung von Gebäudeöffnungen und Grundstückseinfassungen zum Schutz vor Hochwasser. Dabei ist ein zusammenlegbares Abdichtkissen aus elastischem Material in Ruhestellung in einem Behälter zusammengehalten und unterhalb der zu schützenden Gebäudeöffnung im Außenbereich angebracht. Das Kissen ist sowohl vertikal als auch horizontal mehrfach unterteilt und weist mehrere Hubkammern sowie Druckkammern auf. Im Bedarfsfall werden zuerst die Hubkammern und danach die Druckkammern über eine fest installierte Luftleitung mit Druckluft gefüllt. Nachteilig ist, dass sich die vorgeschlagene Vorrichtung nur zur Anwendung bei einzelnen Gebäudeöffnungen eignet und das Aufrichten des Abdichtkissens nur bei unbeschädigten Hubkammern gelingt. Ein weiterer gattungsgemäßer aufblasbarer Schutzwall ist aus der Druckschrift DE 101 11 905 A1 bekannt.

Der aufblasbare Schutzwall gemäß Offenbarung in DE 10 2010 046 504 A1 ist in einem U-förmigen Kanalsystem angeordnet und besteht aus mehreren, mit Luft befüllbaren Schläuchen in einem Stahl- oder Kunststoffnetz, welche beide in dem Kanalsystem verankert sind.

Aus der Druckschrift EP 0 586 364 A1 ist ein weiterer gattungsgemäßer Hochwasserschutzwall bekannt, der aus mehreren, übereinander angeordneten, zylinderförmigen Luftkammern besteht, welche von einer Schutzhülle umgeben sind. Die Luftkammern werden in einem Kanal um das zu schützende Gebäude herum bereitgestellt und im Bedarfsfall befüllt.

Die Druckschrift DE 20 2013 010 218 U1 beschreibt einen weiteren Schutzwall, der mehrere miteinander verbundene flexible, aufblasbare schlauchförmige Elemente umfasst und in einem speziellen Kanal rund um das zu schützende Gebäude aufbewahrt wird. Der Schutzwall ist von einer Folie umhüllt, welche mit einem wasserdichten Unterbau des zu schützenden Gebäudes verbunden ist. Zur Verbindung verschiedener Module des vorgeschlagenen Systems werden wasserdichte Schnellverschlüsse verwendet.

Ein gemeinsamer Nachteil der vorstehend beschriebenen Lösungen des Standes der Technik besteht darin, dass erhebliche bauliche Veränderungen am zu schützenden Gebäude oder an einer damit im Zusammenhang stehenden Bausubstanz vorgenommen werden müssen und in jedem Fall Elemente zur dauerhaften Befestigung der Schutzvorrichtung an der vorhandenen Bausubstanz erforderlich sind. Ein weiterer Nachteil bekannter Systeme besteht darin, dass sie den Anforderungen eines mobilen Systems zum schnellen Auf- und Abbau nicht entsprechen.

### Aufgabe der Erfindung und Lösung

Die Aufgabe der vorliegenden Erfindung besteht daher in der Bereitstellung eines vergleichsweise einfachen mobilen Systems zum Schutz von Objekten wie insbesondere von Gebäuden oder Gebäudeabschnitten, welches nicht an dem zu schützenden Objekt oder einer dafür vorgesehenen Bausubstanz befestigt zu werden braucht und sich hinsichtlich seiner vertikalen Ausdehnung selbsttätig an den Hochwasserpegel anpasst.

Zur Lösung der gestellten Aufgabe werden zwei alternative Schutzsysteme gemäß Haupt- und Nebenanspruch sowie entsprechende Verwendungen dieser Systeme vorgeschlagen. In der nachfolgenden Beschreibung sowie in den Figuren und Unteransprüchen sind jeweils bevorzugte Ausführungsformen dargelegt.

### Beschreibung

Im Gegensatz zu den bisher bekannten Lösungen ermöglicht das vorliegend beschriebene mobile System einen wirksamen Schutz eines Gebäudes oder eines anderen Objektes einschließlich eines Freiarreales vor Hochwasser, ohne dass das zu schützende Objekt irgendwelche Mittel zur Aufbewahrung, Führung und Befestigung des Systems benötigt, wodurch auch am System selbst keine entsprechenden Mittel zur Befestigung desselben am Objekt erforderlich sind.

Der Grundgedanke der vorliegenden Erfindung besteht darin, dass eine Folie oder Schutzplane mit Hilfe eines damit verbundenen Auftriebskörpers an beispielsweise einer Gebäudewand aufgrund eines steigenden Wasserpegels selbsttätig hochfährt. Das erfindungsgemäß vorgeschlagene System umfasst daher mehrere funktionelle Elemente oder Komponenten, die bevorzugt in einem funktionellen Modul zusammenwirken.

Nach einer Alternative umfasst ein erfindungsgemäßes System zum Schutz eines Objektes vor Hochwasser und Überschwemmungen demgemäß einen flexiblen, aufblasbaren und länglich gestreckten wie beispielsweise schlauchförmigen (zylinderförmigen) Auftriebskörper, eine Schutzhülle zur Aufnahme des Auftriebskörpers, und eine flexible, nicht aufblasbare Folie, welche dem Auftriebskörper als Vorlauf dient und mit der Schutzhülle verbunden oder verbindbar ist, wobei diese Verbindung eine direkte, unmittelbare Verbindung der beiden Elemente oder Komponenten ohne Einsatz etwaiger zusätzlicher Mittel wie Seile, Ketten oder dergleichen darstellt. Das System ist derart ausgelegt, dass ein dem Auftriebskörper zugewandter, die gewünschte Schutzhöhe gewährleistender Abschnitt der Folie im Anwendungsfall durch den Auftrieb des Auftriebskörpers an dem zu schützenden Objekt selbsttätig vertikal verfahren werden kann. Im Gegensatz zu den Lösungen des Standes der Technik weisen die funktionellen Elemente des Auftriebskörpers, der Schutzhülle und der Folie keine Mittel zur Befestigung am Objekt oder einer funktionell damit im Zusammenhang stehenden Bausubstanz auf, sodass keines dieser Elemente des Systems zu irgendeinem Zeitpunkt seiner Anwendung fest mit dem zu schützenden Objekt oder der Bausubstanz verbunden ist, weshalb das Objekt keine Mittel zur Aufbewahrung, Führung und/oder Befestigung des Systems benötigt und daher keinerlei bauliche Veränderungen des zu schützenden Objektes oder der Bausubstanz erforderlich sind. Aufgrund der Ausgestaltung als mobiles System kann der Auf- und Abbau desselben auch von einer technisch unbedarften Person in kurzer Zeit und ohne weitere Hilfsmittel vorgenommen werden.

Nach einer weiteren, alternativen Ausführungsform entfällt die Schutzhülle als separate Komponente, da die als Vorlauf dienende Folie, welche im Rahmen dieser Ausführungsform auch als Schutzplane bezeichnet wird, die Funktionalität der Schutzhülle gleichermaßen erfüllt. Während die Folie der erstgenannten Alternative mit der Schutzhülle verbunden oder verbindbar ist, ist die Folie oder Schutzplane gemäß zweiter Alternative mit dem Auftriebskörper verbunden oder verbindbar ausgestaltet, wobei es gemäß erster Alternative bevorzugt ist, dass die funktionellen Elemente der Schutzhülle und der Folie entweder einteilig oder in der Ausgestaltung von zwei wasserdicht miteinander verbundenen oder verbindbaren Systemkomponenten bereitgestellt sind. Wie der Fachmann weiß, kann eine wasserdichte Verbindung mittels Schweißen, Verkleben, oder unter Verwendung von bekannten wasserdichten Schnellverschlüssen wie beispielsweise Reiß- oder Klettverschlüssen erfolgen. Im Rahmen der zweiten Alternative, bei der bevorzugt eine gegenüber der Folie verlängerte Schutzplane eingesetzt wird, kann die Verbindung dieser Schutzplane mit dem Auftriebskörper einfacher und weniger materialintensiv, wie z.B durch Einschlagen des Auftriebskörpers unter Verwendung von Schnellverschlüssen erfolgen, die nicht unbedingt wasserdicht ausgeführt sein müssen. Wie zuvor im Rahmen der ersten Alternative ausgeführt, handelt es sich bei der Verbindung der Elemente oder Komponenten um eine direkte. d.h. unmittelbare Verbindung ohne Einsatz irgendwelcher anderen Verbindungsmittel wie Seile, Ketten oder dergleichen.

Beide Ausführungsformen gewährleisten, dass ein dem Auftriebskörper zugewandter, die gewünschte Schutzhöhe gewährleistender Abschnitt der Folie oder Schutzplane im Anwendungsfall durch den Auftrieb des Auftriebskörpers an dem zu schützenden Objekt selbststätig vertikal verfahren werden kann. Ferner ist beiden Alternativen gemeinsam, dass ein dem Auftriebskörper abgewandter, verbleibender Abschnitt der Folie im Anwendungsfall vom zu schützenden Objekt wegweisend verlegt ist.

Wie bereits ausgeführt, werden in dem erfindungsgemäßen Modul verschiedene Funktionalitäten vereinigt. Die Funktionalität des Auftriebes erfüllt der aufblasbare Auftriebskörper, welcher länglich gestreckt und bevorzugt schlauch- oder zylinderförmig ausgestaltet ist und einen Durchmesser aufweist, dessen Dimensionierung für die Bereitstellung der geforderten Funktionalität geeignet ist und zweckmäßigerweise in Abhängigkeit des tatsächlichen oder zu erwartenden Gewichts des durch ihn beispielsweise an einer Gebäudewand hochzufahrenden Abschnittes der Folie oder Schutzplane erfolgt. Die horizontale Ausdehnung (Länge/Breite) des länglich gestreckten wie bevorzugt schlauch- oder zylinderförmigen Auftriebskörpers wird lediglich durch praktische Gesichtspunkte (Handhabung, Gewicht, gewünschte Schutzbreite) eingeschränkt. Da das System bevorzugt modular aufgebaut ist, können Auftriebskörper unterschiedlicher Länge und unterschiedlichen Durchmessers eingesetzt werden, wobei es bevorzugt ist, für eine gegebene Anwendung mehrere Auftriebskörper gleichen Durchmessers einzusetzen. Zum Schutz gerade verlaufender Objekte wie beispielsweise einer Gebäudewand sollte die Längsachse des Auftriebskörper in etwa einer Gerade entsprechen. Spezielle Lösungen zum Schutz von beispielsweise Gebäudeecken erfordern Auftriebskörper, welche beispielsweise rechtwinklig ausgestaltet sind und sich demgemäß durch eine rechtwinklig verlaufende Längsachse kennzeichnen. Es ist klar, dass beide angesprochenen Formen des Auftriebskörpers zum Aufbau einer sowohl gerade als auch eckig verlaufenden Schutzvorrichtung miteinander kombiniert werden können. Es wird darauf hingewiesen, dass der Auftriebskörper entlang seiner Längsachse sowohl mit einer als auch mit mehreren Luftkammern ausgestaltet sein kann, wobei sowohl diese Luftkammern als auch solche mehrerer benachbarter Auftriebskörper fluidisch miteinander in Verbindung stehen können. Ferner ist es bevorzugt, dass die vertikale Ausdehnung des länglich gestreckten Auftriebskörpers im Gegensatz zu einer aus mehreren, vertikal übereinander angeordneten Luft- oder Hubkammern (mit oder ohne fluidische Verbindungen) bestehenden Schutzwand lediglich eine (einzige) Luftkammer als Auftriebskörper umfasst.

Dem Fachmann ist ebenfalls klar, dass die Geometrie des Auftriebskörpers keinen Beschränkungen unterliegt, sofern dessen Funktionalität für das Gesamtsystem gewährleistet ist. Im Allgemeinen sind geometrische Körper geeignet, die von ebenen Seitenflächen begrenzt sind, wie z.B. Zylinder, Prismen und Antiprismen. Besonders geeignet sind Zylinder wie z.B. gerade Kreiszylinder, elliptische Zylinder, und Prismen wie insbesondere gerade Prismen, deren Seitenkanten parallel und gleich lang sind und die ein Vieleck wie z.B. ein Viereck, Fünfeck, Sechseck etc. als Grundfläche aufweisen.

Die Funktionalitäten des Schutzes des Auftriebskörpers vor mechanischen Beschädigungen durch beispielsweise Treibgut oder dergleichen sowie der Verbindung der Funktionalität des Auftriebes mit der Funktionalität des Objektschutzes erfüllt die Schutzhülle, in welche der Auftriebskörper aufgenommen wird. Wie bereits ausgeführt, werden im Rahmen der vorliegenden Erfindung zwei alternativ bevorzugte Ausführungsformen bereitgestellt. Nach einer Alternative werden die funktionellen Elemente der Schutzhülle und der Folie in Form einer einteiligen Schutzplane (s.o.) bereitgestellt, wohingegen diese beiden funktionellen Elemente nach einer weiteren Alternative in der Ausgestaltung von zwei miteinander wasserdicht verbundenen oder verbindbaren Systemkomponenten bereitgestellt werden. Die einteilige Schutzplane umfasst somit die Folie sowie einen daran anschließenden erweiterten Folienbereich, wobei die Länge der Längsseiten dieses erweiterten Bereichs an den Umfang eines zu verwendenden Auftriebskörpers angepasst ist, sodass der erweiterte Bereich die Funktionalität der Schutzhülle erfüllen kann. Die Schutzplane kann vollständig aus einem Material hergestellt sein oder aus zwei oder mehreren, mittels Schweißen oder Verkleben zusammengesetzten Folienabschnitten bestehen. Die Breitseite an demjenigen Ende einer Schutzplane, mit welchem die Umhüllung (das Einschlagen) eines gegebenen Auftriebskörpers erfolgt, weist bevorzugt Mittel wie z.B. Schnellverschlüsse auf, mit denen die Umhüllung des Auftriebskörpers fixiert werden kann. Je nach ausgewähltem Mittel (Schnüre, Gurte, Klettverschlüsse, Druckknöpfe, Reißverschlüsse und dergleichen) verfügt die Schutzplane über korrespondierende Verschlusskomponenten (Ösen, Schnallen, Klettbänder, Druckknopfaufnehmer, Reißverschlüsse und dergleichen). Diese Verschlusskomponenten sind auf der Schutzplane in einem Abstand zur genannten Breitseite angeordnet, welcher in etwa dem Umfang des aufzunehmenden Auftriebskörpers entspricht. Da die Schutzplane über ihre gesamte Länge (Längsseite) einen ununterbrochenen Wasserschutz darstellt, ist die Auswahl geeigneter Mittel wie z.B. Schnellverschlüsse nicht auf wasserdichte Ausführungsformen beschränkt, auch wenn sie in bestimmten Anwendungsfällen gewünscht sein können.

Die alternative Ausführungsform betrifft die Bereitstellung der Folie und der Schutzhülle, wobei diese funktionellen Elemente entweder einteilig (Schutzhülle mit der Folie verschweißt, verklebt oder dergleichen) oder in der Ausgestaltung von zwei wasserdicht miteinander verbindbaren Systemkomponenten bereitgestellt sein können. Somit befindet sich die eine Verschlusskomponente an der Breitseite oder dem Ende der Folie, welche bzw. welches dem Auftriebskörper zugewandt ist, während die Schutzhülle mit der anderen, korrespondierenden Verschlusskomponente ausgestattet ist. Sofern die Schutzhülle als flexibler Hohlzylinder ausgestaltet ist und somit der bevorzugten Geometrie eines aufzunehmenden Auftriebskörpers entspricht, ist die korrespondierende Verschlusskomponente vorzugsweise an der äußeren Wandung parallel zur Längsachse des Zylinders angeordnet. In diesem Fall wird mindestens ein gegebener Auftriebskörper in die Hülle eingeführt, und die Elemente der Folie und der Schutzhülle werden unter Verwendung wasserdichter Schnellverschlüsse miteinander verbunden, wobei die Reihenfolge der Handlungsschritte auch umgekehrt sein kann. Alternativ kann die Schutzhülle in Form eines offenen Rechteckes bereitgestellt werden, wobei dem Fachmann klar ist, dass die längliche Ausdehnung der Breitseiten derjenigen der Längsseiten übersteigt, sofern die vorliegende Terminologie angewendet wird. Selbstverständlich müssen in diesem Fall beide Breitseiten Verschlusskomponenten aufweisen, die mit sich selbst sowie mit der korrespondierenden Verschlusskomponente der Folie wasserdicht verbindbar ausgestaltet sind.

Vorzugsweise wird die Geometrie der Schutzhülle in Abhängigkeit der Geometrie des Auftriebskörpers ausgewählt.

Die Funktionalität des Schutzes eines Objektes wie beispielsweise einer Gebäudewand wird durch die Folie oder Schutzplane, welche mit dem Auftriebskörper verbunden ist, gewährleistet, wobei die Begriffe der Folie einerseits und der Schutzplane andererseits im Rahmen von zwei alternativ bevorzugten Ausführungsformen verwendet werden (s.o.). Die Folie bzw. Schutzplane wird in der Regel in Form eines Vierecks bereitgestellt, wobei die Form eines Rechteckes mit jeweils zwei gleich langen Längs- und Breitseiten bevorzugt ist. Im Anwendungsfall verlaufen beide Breitseiten in etwa parallel zur Gebäudewand, während die Längsseiten hierzu in etwa rechtwinklig verlaufen. Im Bereich einer beispielsweise zu schützenden Gebäudeecke wird ein Modul vorgeschlagen, dessen Auftriebskörper in etwa rechtwinklig ausgestaltet ist, und dessen Folienvorlauf die Form eines Trapezes aufweist.

Als geeignetes Material für die Folie/Schutzplane und die gegebenenfalls vorhandene Schutzhülle kommen insbesondere flexible, beschichtete (z.B. mit PVC) und gegebenenfalls mit einem Schutzlack (z.B. Acrylat-Lack) versiegelte Trägergewebe in Betracht, wie sie herkömmlich z.B. in der Herstellung von Zelten und Schutzplanen verwendet werden (z.B. duraskin^{®} B1017), wobei die Dicke einer solchen Folie/Schutzplane vorzugsweise zwischen 1 und 5 wie beispielsweise 1,5 mm beträgt.

Erfindungsgemäß bevorzugt bilden die funktionellen Elemente des Auftriebskörpers, der Folie/Schutzplane und der gegebenenfalls vorhandenen Schutzhülle ein Modul. Vorzugsweise weist das dem Auftriebskörper oder dem Schutzhüllenbereich abgewandte Ende der Folie eines Moduls Mittel zur Fixierung derselben am Boden auf. Ferner ist bevorzugt, dass das erfindungsgemäße System zur Verbreiterung seines Objektschutzes mehrere Module umfasst, die mittels wasserdichter Schnellverschlüsse direkt, d.h. unmittelbar miteinander verbindbar sind.

Insbesondere aus praktischen Gründen beträgt die Breite eines Moduls und damit auch bevorzugt die jeweilige Breite eines vom Modul umfassten Elementes 1 bis 5 Meter, wobei die Breite aber auch bis zu 10 oder 15 Meter betragen kann. Die längliche Ausdehnung der Folie oder Schutzplane ist grundsätzlich abhängig von der gewünschten Höhe des bereitzustellenden Objektschutzes sowie der zusätzlich als Vorlauf eingeplanten Ausdehnung, im Falle einer Schutzplane ergänzend von der Mantelfläche (dem Umfang) des aufzunehmenden Auftriebskörpers. Der als Vorlauf dienende Folienabschnitt ist im Anwendungsfall vom zu schützenden Objekt wegweisend, d.h. entgegen der zu erwartenden Strömung des auflaufenden Wassers und damit in etwa rechtwinklig zum Verlauf der Objektlinie auf dem vor dem Objekt befindlichen Boden verlegt und erfüllt die Funktionalität einer ausreichenden Ortsfixierung, sodass das nicht mit dem Objekt oder einer damit funktionell im Zusammenhang stehenden Bausubstanz fest verbundene System wirksam an einem seitlichen Verrutschen oder gar Wegschwimmen gehindert wird. Dieser funktionelle Aspekt des als Vorlauf bezeichneten Folienabschnittes wird entsprechend des steigenden Volumens an auflaufendem Wasser durch dessen gleichsam steigendes Gewicht fortlaufend verstärkt, sodass das mobile System grundsätzlich keinerlei Befestigung am Objekt oder an dem vorgelagerten Bodenbereich erfordert.

Soll das System beispielsweise eine Schutzhöhe von 2 Meter gewährleisten und die Folie über weitere 3 Meter auf dem vor dem Objekt befindlichen Boden ausgelegt werden, betrüge die Gesamtlänge der Folie oder Schutzplane ohne Berücksichtigung des Umfanges des Auftriebskörpers 5 Meter. Im Anwendungsfall würde der die gewünschte Schutzhöhe gewährleistende Abschnitt der Folie oder Schutzplane z.B. mehrfach übereinandergefaltet nahe des zu schützenden Objektes auf den Boden gelegt und mit dem Auftriebskörper oder seiner gegebenenfalls vorhandenen Schutzhülle verbunden werden, sofern dies nicht bereits vorher erfolgt ist. Der verbleibende, die Funktionalität der Ortsfixierung gewährleistende Abschnitt der Folie oder Schutzplane wird vom zu schützenden Objekt wegweisend verlegt. Um eine (temporär) ortfeste Installation zu unterstützen, kann das dem Auftriebskörper oder dem Schutzhüllenbereich abgewandte Ende der Folie oder Schutzplane eines Moduls Mittel zur Fixierung derselben am Boden aufweisen. Hierfür geeignete Mittel wären beispielsweise Ösen, mit Hilfe derer das Folienende z.B. mittels üblicher Metallhaken am Boden fixiert werden kann, wobei darauf hinzuweisen ist, dass sich dieser Fixpunkt unter Berücksichtigung des obigen Fallbeispiels in etwa 3 Meter von dem zu schützenden Objekt entfernt befindet. Alternativ können Schnüre oder Gurte eingesetzt werden, um das Folienende beispielsweise an einer Einfriedung wie an einem Zaun fixieren zu können.

Nach einer bevorzugten Ausführungsform umfasst das erfindungsgemäße System neben den funktionellen Elementen des Auftriebskörpers, der Folie/Schutzplane und der gegebenenfalls vorhandenen Schutzhülle zusätzlich ein Befestigungselement, mit welchem das dem Auftriebskörper oder dem Schutzhüllenbereich abgewandte Ende der Folie oder Schutzplane eines Moduls am Boden fixierbar ist, wobei das Befestigungselement bevorzugt als Profilschiene zur sicheren Aufnahme des genannten Folienendes ausgestaltet ist. Die Profilschiene ist vorzugsweise zweiteilig ausgestaltet und umfasst eine Grundschiene sowie eine Deckleiste, wobei die Grundschiene und die Deckleiste lösbar miteinander verbunden werden können. In den Figuren sind beispielhaft geeignete Ausführungsformen der Profilschiene sowie seiner Bestandteile dargestellt. Die oder das Mittel des oben genannten Folienendes zur Befestigung der Folie im Befestigungselement kann beispielsweise in Form einer Verdickung wie einem Kehlgummi, einer Stange oder dergleichen bereitgestellt sein, sodass die Folie durch Einlegen des Mittels in das Befestigungselement ortsfest fixiert werden kann. Je nach konkreter Beschaffenheit des dem Objekt vorgelagerten Bodenbereichs (Erdreich oder befestigter Grund) kann das Befestigungselement bzw. seine Grundschiene dauerhaft oder lösbar wie beispielsweise durch Verschrauben mit dem Boden verbunden werden oder alternativ einen Bodenanker aufweisen, um einen sichereren Halt des Befestigungselementes zu gewährleisten.

Im Falle der Verwendung eines Bodenankers ist es bevorzugt, dass das Befestigungselement im Bereich seines Bodenankers eine weitere Folie zum Schutz vor Unterspülung aufweist.

Nach einem weiteren Aspekt der vorliegenden Erfindung wird ein Verfahren zur Schaffung eines Systems zum Schutz eines Objektes vor Hochwasser und Überschwemmungen vorgeschlagen, wobei die vorliegend beschriebenen funktionellen Komponenten (Auftriebskörper, Folie/Schutzplane, ggf. Schutzhülle, vorzugsweise zusätzlich Befestigungselement) am zu schützenden Objekt derart bereitgestellt werden, dass ein zur Gewährleistung einer gewünschten Schutzhöhe vorgesehener Folienabschnitt durch den Auftrieb des Auftriebskörpers an dem zu schützenden Objekt selbsttätig vertikal verfahren werden kann, während ein weiterer, zur Gewährleistung einer gewissen Ortsfixierung vorgesehener Folienabschnitt vom zu schützenden Objekt wegweisend auf dem Boden verlegt wird. Gewünschtenfalls kann das dem Auftriebskörper abgewandte Ende der Folie, welches auf dem dem Objekt vorgelagerten Bodenbereich verlegt ist, zur Unterstützung der ortsfesten Fixierung mit einem Befestigungselement gesichert werden. Hinsichtlich der hierfür benötigten Komponenten wird auf die entsprechenden Abschnitte der vorliegenden Beschreibung verwiesen.

Ferner betrifft die vorliegende Erfindung die Verwendung des vorliegend beschriebenen mobilen Systems zum Schutz eines Objektes vor Hochwasser und Überschwemmungen, wobei der Auftriebskörper und die gegebenenfalls vorhandene Schutzhülle sowie ein dem Auftriebskörper zugewandter, die gewünschte Schutzhöhe gewährleistender Abschnitt der Folie oder Schutzplane im Anwendungsfall nahe des zu schützenden Objektes auf den Boden gelegt und ein dem Auftriebskörper abgewandter, verbleibender Abschnitt der Folie oder Schutzplane vom zu schützenden Objekt wegweisend verlegt werden, wodurch der zur Gewährleistung einer gewünschten Schutzhöhe vorgesehene Folienabschnitt durch den Auftrieb des Auftriebskörpers an dem zu schützenden Objekt selbsttätig vertikal verfahren werden kann. Das Gewicht des auflaufenden Wassers drückt den vom Objekt wegweisend verlegten Folienabschnitt auf den Boden und sichert auf diese Weise das System gegen Verrutschen oder Wegschwimmen.

Nach einer bevorzugten Ausführungsform der Verwendung ist kein Element oder keine Komponente des Systems zu irgendeinem Zeitpunkt seiner Anwendung fest mit dem zu schützenden Objekt oder einer damit funktionell zusammenhängenden Bausubstanz wie z.B. ein vorhandenes Fundament oder eine vorhandene Schutzmauer verbunden, weshalb das Objekt keine Mittel zur Aufbewahrung, Führung und/oder Befestigung des Systems benötigt und daher keinerlei bauliche Veränderungen des zu schützenden Objektes und/oder der Bausubstanz erforderlich sind.

Nach einer weiteren bevorzugten Ausführungsform der Verwendung wird das dem Auftriebskörper abgewandte und vom zu schützenden Objekt wegweisend verlegte Ende der Folie oder Schutzplane in einem dem Objekt vorgelagerten Bodenbereich am Boden fixiert.

### Figurenbeschreibung

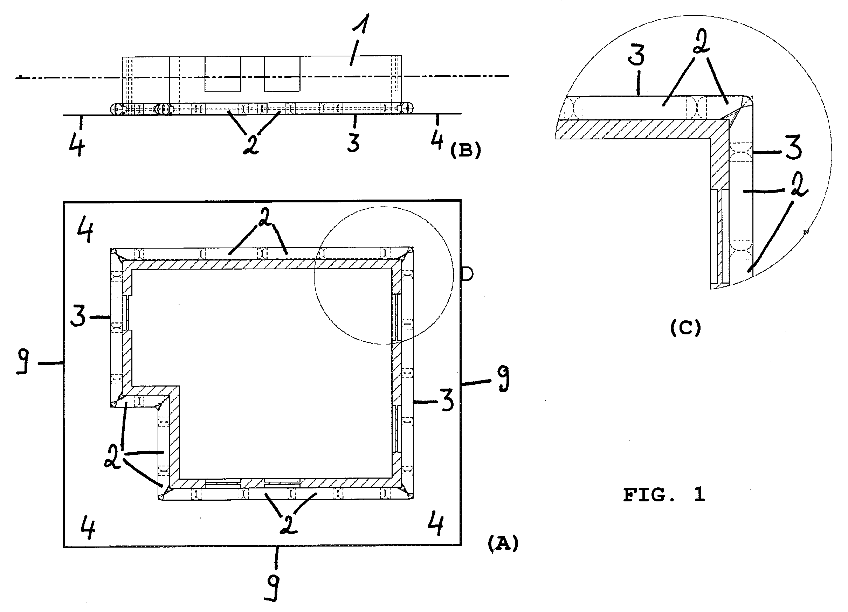

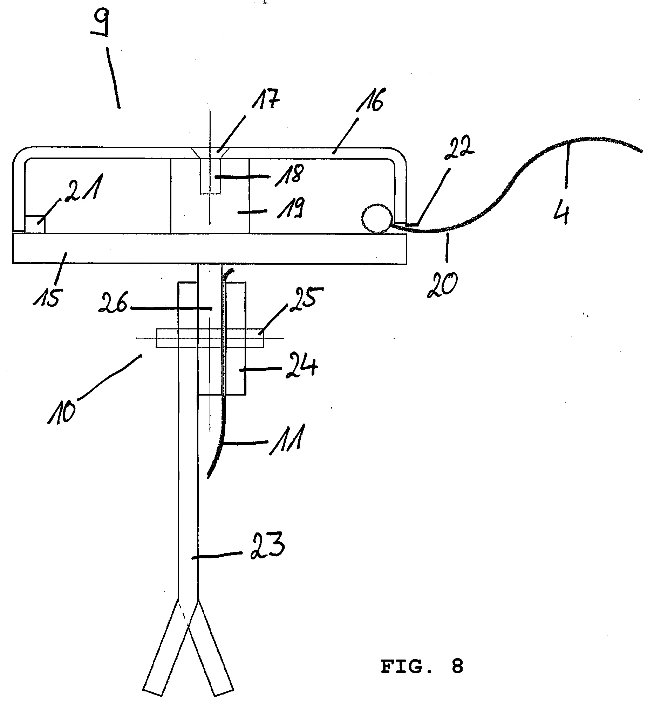

**Figur 1** zeigt eine Draufsicht (A), eine Seitenansicht (B) sowie eine Detaildarstellung (C) eines erfindungsgemäßen Schutzsystems, welches ein zu schützendes Objekt 1 vor einer Überflutung schützen soll. Das gezeigte mobile System umfasst mehrere Auftriebskörper 2, Schutzhüllen 3 und Folienvorläufer 4, die derart konfiguriert sind, dass sie das zu schützende Objekt eng umschließen, wobei die jeweiligen Folienvorläufer vom zu schützenden Objekt wegweisend verlegt sind. Die einzelnen Auftriebskörper 2 können gewünschtenfalls fluidisch miteinander verbunden sein sowie eine gerade oder gewinkelte Geometrie aufweisen. Derjenige Abschnitt der Folie 4, welcher zur Gewährleistung einer vertikalen Schutzhöhe (gestrichelt angedeutet in der Seitenansicht) verwendet wird, ist in dieser Figur nicht dargestellt, während der vom Objekt 1 oder Auftriebskörper 2 wegweisende Folienabschnitt 4 nach einer bevorzugten Ausführungsform mittels eines Befestigungselementes 9 am Boden fixiert ist. Obwohl das funktionelle Element der Folie 4 einteilig bereitgestellt werden kann, ist die modulare Verwendung mehrerer Folien 4 bevorzugt. Ein bedeutender Vorteil des erfindungsgemäß vorgeschlagenen Systems gegenüber vorbekannten Lösungsansätzen besteht darin, dass Hindernisse wie z.B. kleinere Büsche und bauliche Gegebenheiten des zu schützenden Objektes wie z.B. Lichtschächte mit dem vom Objekt 1 oder Auftriebskörper 2 wegweisenden, flexiblen Folienabschnitt 4 problemlos überwunden werden können.

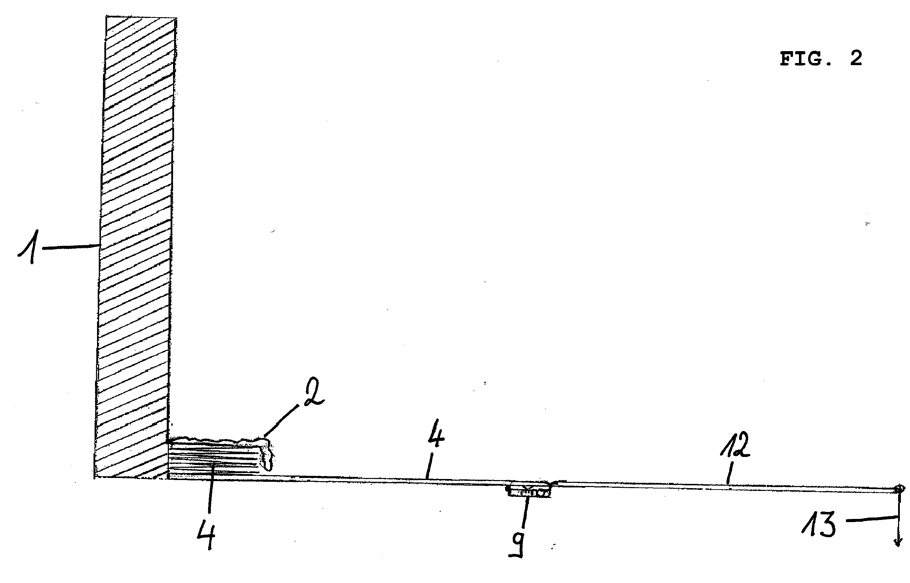

Die Figuren 2 bis 6 zeigen das Schutzsystem nach einer bevorzugten Ausführungsform in der Seitenansicht. In Figur 2 ist die Ausgangssituation eines Anwendungsfalles dargestellt. In einem Abstand von etwa 1,5 Meter zur zu schützenden Hauswand 1 ist eine Profilschiene 9 im Boden befestigt. Das dem Auftriebskörper 2 abgewandte Ende der Folie 4 ist in die Profilschiene 9 eingelegt und wird dort in der Position fixiert. Die Folie 4 verläuft auf dem Boden bis zur zu schützenden Hauswand 1 und wird dort mehrfach übereinander gefaltet, um dem Auftriebskörper 2 einen der gewünschten Schutzhöhe gewährleistenden Folienabschnitt 4 zur Verfügung zu stellen. Der mit der Folie 4 verbundene Auftriebskörper 2 ist noch nicht aufgeblasen. In den **Figuren 2** bis **6** ist zusätzlich eine Ausführungsform dargestellt, bei der das System zusätzlich eine ergänzende Folie 12 umfasst, deren proximales Ende ebenfalls in der Bodenschiene 9 fixiert und von der zu schützenden Hauswand 1 wegweisend verlegt ist, wobei das distale Ende dieser ergänzenden Folie 12 mit Hilfe eines Metallhakens 13 im Boden befestigt ist.

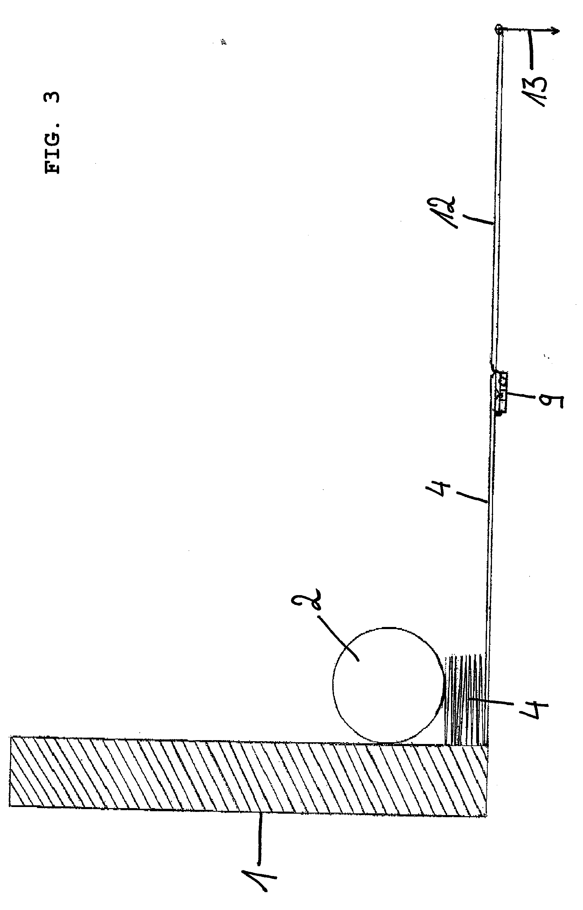

Die **Figur 3** zeigt die aus **Figur 2** bekannte Ausgangssituation, jedoch mit aufgeblasenem Auftriebskörper 2.

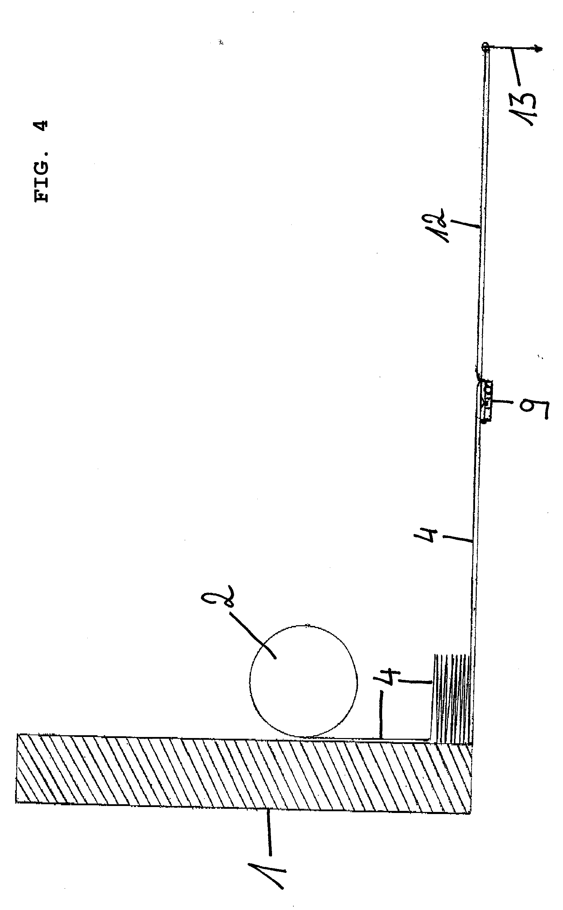

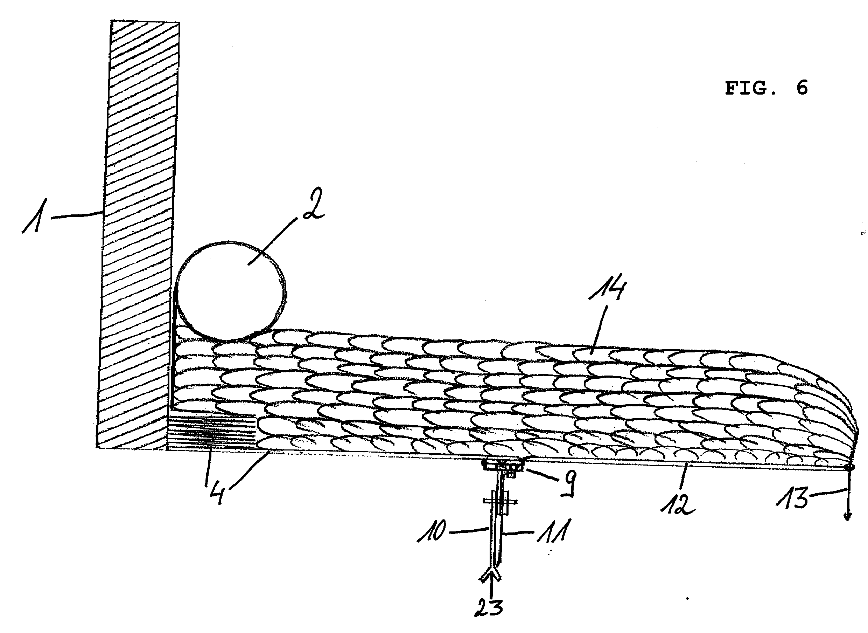

Die **Figur 4** zeigt den Zustand des Systems bei auflaufendem Wasser (nicht dargestellt). Es ist erkennbar, dass der Auftriebskörper 2 durch das Wasser, auf dem er aufschwimmt, an der Hauswand 1 vertikal nach oben verfahren worden ist und dabei bereits einen Teil der zur Gewährleistung einer gewünschten Schutzhöhe gefaltet bereitgestellten Folie 4 entlang der Hauswand 1 hochgezogen hat. Durch das Gewicht des auflaufenden Wassers wird der von der Hauswand 1 wegweisend verlegte Folienabschnitt 4 auf den Boden gedrückt und dort ortsfest fixiert, sodass grundsätzlich keine Befestigung der Folie 4 am Boden erforderlich ist, um ein Wegschwimmen des Systems zu verhindern (siehe auch Beschreibung zur Figur 6).

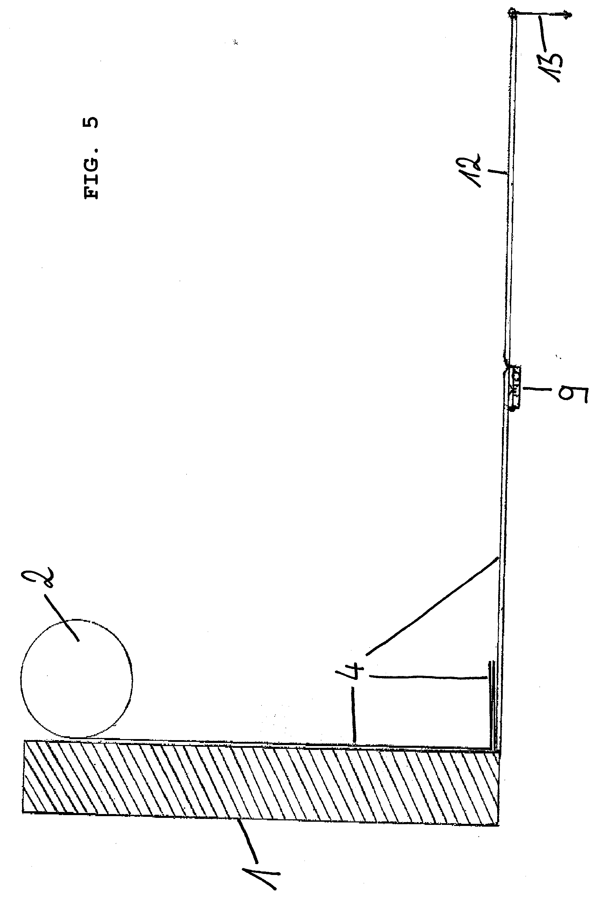

In **Figur 5** ist erkennbar, dass die Folie 4 mit ihrer zur Gewährleistung einer gewünschten Schutzhöhe erforderlichen Länge durch den Auftrieb des Auftriebskörpers 2 soweit nach oben verfahren worden ist, dass die zu schützende Hauswand 1 vom aufgelaufenen Wasser (nicht dargestellt) nicht benetzt werden kann.
In **Figur 6** ist die aus **Figur 4** bekannte Situation noch einmal gezeigt; hier jedoch mit einer schematischen Darstellung des bis dahin aufgelaufenen Wassers 14.

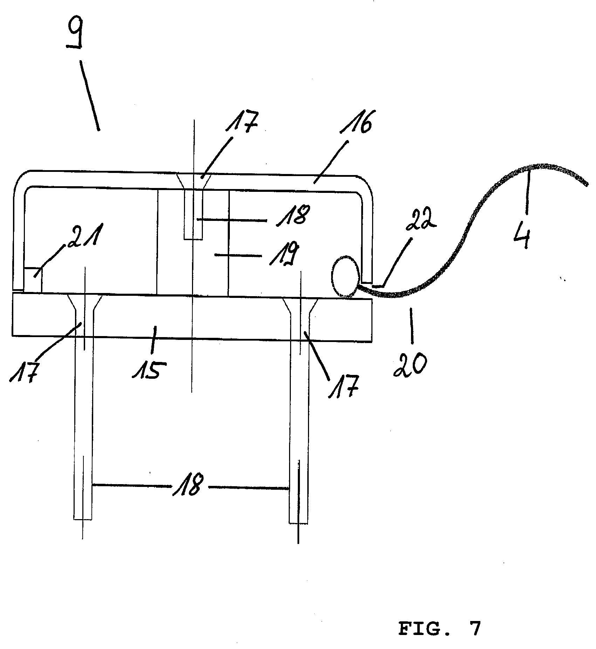

In den **Figuren 7** bis **12** sind verschiedenen Ausführungsformen des Befestigungselementes 9 jeweils in Seitenansicht dargestellt. Die **Figur 7** zeigt den zweiteiligen Aufbau eines als Profilschiene 9 ausgestalteten Befestigungselementes 9. Die Grundschiene 15 weist zwei Bohrungen 17 auf, um sie z.B. mittels geeigneter Schrauben 18 auf festem Grund fixieren zu können. Die Grundschiene 15 verfügt im mittleren Bereich über einen Steg 19, mit dessen Hilfe die Deckleiste 16 mit der Grundschiene 15 lösbar wie beispielsweise mit einer Schraube 18 bei gleichzeitigem Einklemmen des Folienendes 20 verbunden werden kann. Die Grundschiene 15 kann über einen Anschlag 21 verfügen, um ein passgenaues Aufsetzen der Deckleiste 16 auf die Grundschiene 15 zu unterstützen. Erkennbar ist ferner die Öffnung 22 an einer Seite der Deckleiste 16, durch welche die Folie 4 jenseits des eingelegten Folienendes 20 nach außen tritt.
Die in der **Figur 8** dargestellte Ausführungsform betrifft ein Befestigungselement 9, welches zur besseren Fixierung im Boden einen Bodenanker 10 aufweist, welcher gewünschtenfalls einbetoniert werden kann. Die Grundschiene 15 ist als T-Element ausgestaltet und verfügt daher über eine Längs- oder Mittelrippe 26, welche rechtwinklig im mittleren Bereich der Grundschiene 15 an derselben angeordnet ist und vertikal nach unten verläuft. Obwohl die Längs- oder Mittelrippe 19 bereits als Verankerungseisen ausgestaltet sein kann (nicht dargestellt), verfügt die dargestellte Ausführungsform zusätzlich über eine Klemmleiste 24 und ein Verankerungseisen 23, um ein weiteres Stück Folie 11 zum Schutz vor einer Unterspülung mittels einer Schraubverbindung 25 einklemmen zu können.

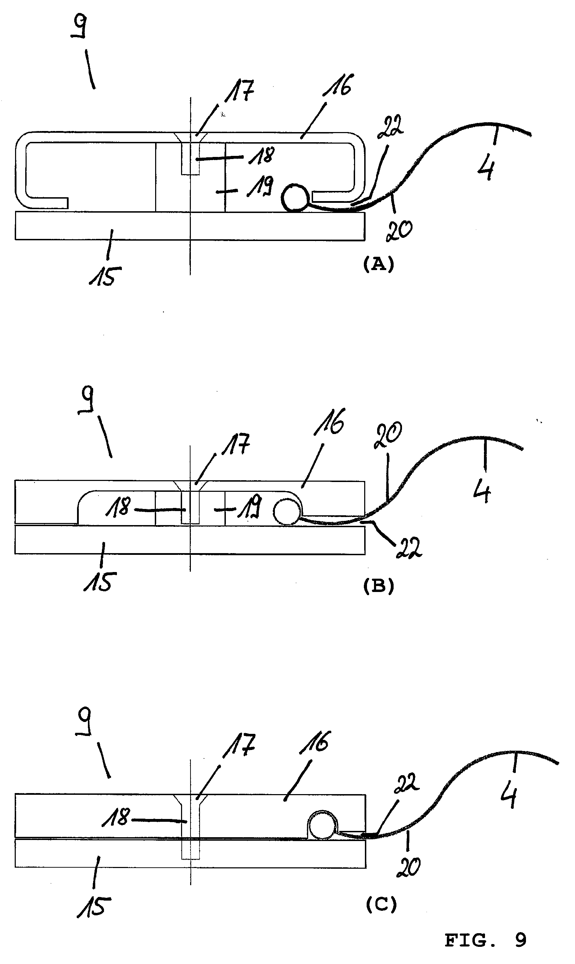

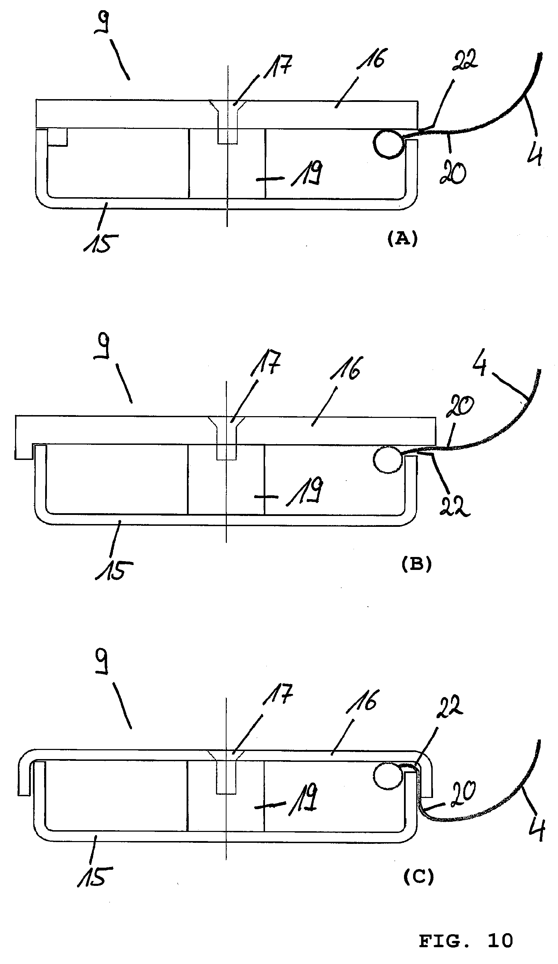

In den **Figuren 9** und **10** sind unterschiedliche Ausgestaltungen des Befestigungselementes 9 dargestellt. Gemeinsame Merkmale einer jeden Ausführungsform sind der zweiteilige Aufbau aus Grundschiene 15 und Deckleiste 16 sowie die jeweilige Möglichkeit des Einklemmens des dem Auftriebskörper abgewandten Folienendes 20. Es wird darauf hingewiesen, dass diese Ausführungsformen unabhängig von der Ausgestaltung der Grundschiene 15 gemäß den Darstellungen in **Figur 7** oder **Figur 8** ausgewählt werden können.

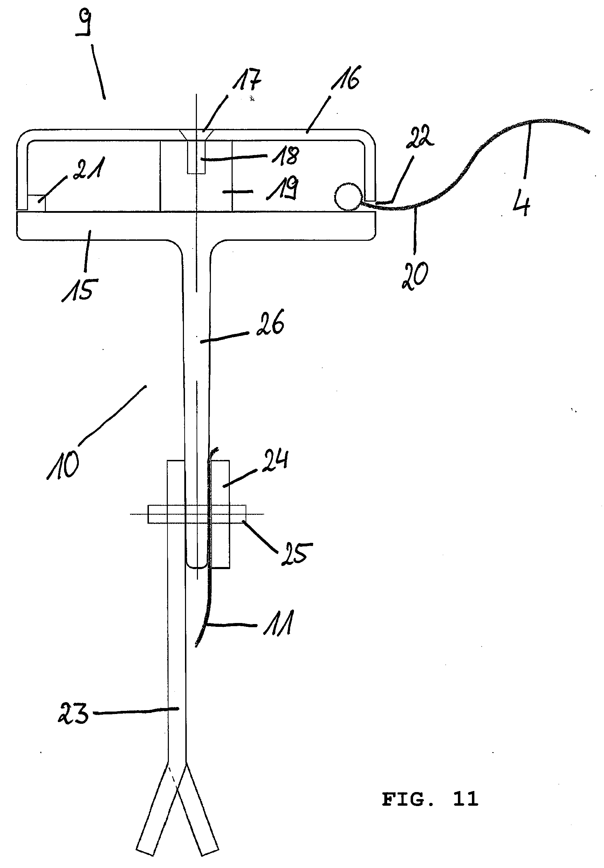

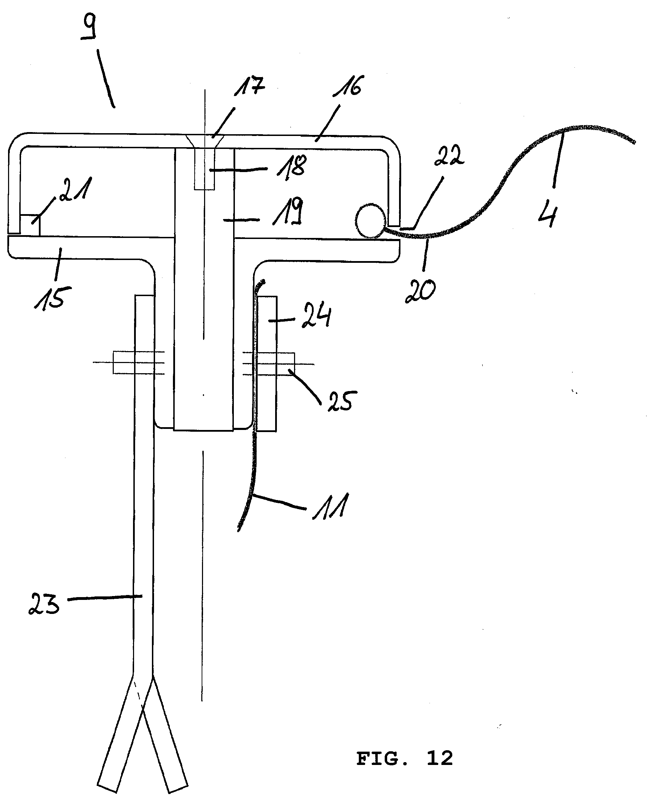

In den **Figuren 11** und **12** sind unterschiedliche Ausführungsformen eines Befestigungselementes 9 mit Bodenanker 10 gemäß allgemeiner Darstellung in **Figur 8** dargestellt.

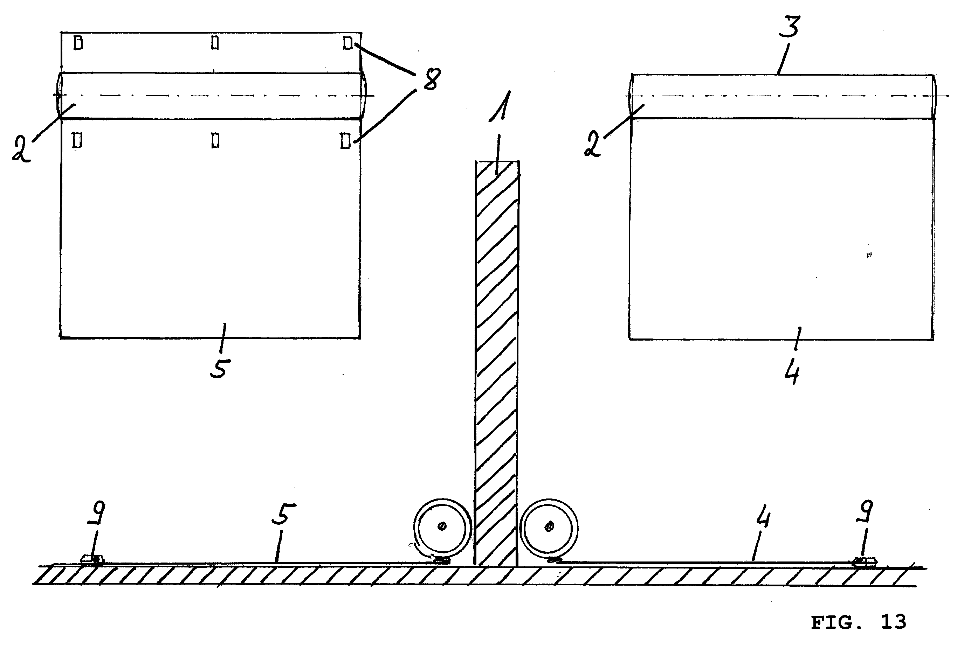

Die **Figur 13** zeigt zwei alternative Ausführungsformen des erfindungsgemäßen Systems, jeweils in Draufsicht und Seitenansicht. Die links der zu schützenden Hauswand 1 dargestellte Variante betrifft ein System, bei dem der Auftriebskörper 2 in einen endständigen Abschnitt der Schutzplane 5 eingeschlagen und durch Verbinden der Komponenten des Schnellverschlusses 8 fixiert wird. Eine Schutzhülle kann in dieser Ausführungsform entfallen, da diese Funktionalität von der Schutzplane 5 erfüllt wird. In der unteren Seitenansicht dieser Variante ist das dem Auftriebskörper 2 abgewandte Ende der Schutzplane 5 mit Hilfe des Befestigungselementes 9 am Boden gesichert.

Die rechts der zu schützenden Hauswand 1 dargestellte Alternative betrifft ein System mit einer Folie 4 und einem Auftriebskörper 2, welcher sich in einer Schutzhülle 3 befindet, wobei die Schutzhülle 3 entweder als separate Komponente mit der Folie 4 mittels eines wasserdichten Schnellverschlusses (nicht dargestellt) verbunden oder als integrierte Komponente der Folie 4 (z.B. durch Verschweißen/Verkleben) ausgestaltet ist.

Sämtliche Ausführungsformen zeigen, dass ein dem Auftriebskörper 2 abgewandter Folienabschnitt 4 vom zu schützenden Objekt 1 wegweisend verlegt ist. Obwohl grundsätzlich entbehrlich, kann das Ende dieses Folienabschnittes 4 erforderlichenfalls mit einem Befestigungselement 9 zusätzlich gegen Verrutschen oder Wegschwimmen gesichert werden.

### Bezugszeichenliste

- 1: Objekt, Hauswand
- 2: Auftriebskörper
- 3: Schutzhülle
- 4: Folie, Folienvorläufer, Folienabschnitt
- 5: Schutzplane
- 6: Modul, Module
- 7: Mittel zur Fixierung, Fixierungsmittel
- 8: wasserdichter Schnellverschluss, Schnellverschluss
- 9: Befestigungselement, Bodenschiene, Profilschiene
- 10: Bodenanker
- 11: Folie als Schutz vor Unterspülung
- 12: ergänzende Folie
- 13: Metallhaken
- 14: Wasser
- 15: Grundschiene
- 16: Deckleiste
- 17: Bohrung, Bohrungen
- 18: Schraube, Schrauben
- 19: Steg
- 20: Folienende
- 21: Anschlag
- 22: Öffnung
- 23: Verankerungseisen
- 24: Klemmleiste
- 25: Schraubverbindung
- 26: Längsrippe, Mittelrippe

## Patentansprüche

1. System zum Schutz eines Objektes (1) vor Hochwasser und Überschwemmungen mit einem flexiblen, aufblasbaren und länglich gestreckten Auftriebskörper (2), einer Schutzhülle (3) zur Aufnahme des Auftriebskörpers (2), und einer flexiblen, nicht aufblasbaren Folie (4), welche dem Auftriebskörper (2) als Vorlauf dient und mit der Schutzhülle (3) verbunden oder verbindbar ist, wobei ein dem Auftriebskörper (2) zugewandter, die gewünschte Schutzhöhe gewährleistender Abschnitt der Folie (4) im Anwendungsfall durch den Auftrieb des Auftriebskörpers (2) an dem zu schützenden Objekt (1) selbsttätig vertikal verfahren werden kann, **dadurch gekennzeichnet, dass** (i) die funktionellen Elemente des Auftriebskörpers (2), der Schutzhülle (3) und der Folie (4) keine Mittel zur Befestigung am Objekt (1) aufweisen, sodass keines dieser Elemente des Systems zu irgendeinem Zeitpunkt seiner Anwendung fest mit dem zu schützenden Objekt (1) oder seiner Bausubstanz verbunden ist, weshalb das Objekt (1) keine Mittel zur Aufbewahrung, Führung und/oder Befestigung des Systems benötigt und daher keinerlei bauliche Veränderungen des zu schützenden Objektes (1) erforderlich sind, und dass (ii) ein dem Auftriebskörper (2) abgewandter, verbleibender Abschnitt der Folie (4) im Anwendungsfall vom zu schützenden Objekt (1) wegweisend verlegt ist.

2. System zum Schutz eines Objektes (1) vor Hochwasser und Überschwemmungen mit einem flexiblen, aufblasbaren und länglich gestreckten Auftriebskörper (2), und einer flexiblen, nicht aufblasbaren Folie (4) oder Schutzplane (5), welche dem Auftriebskörper (2) als Schutzhülle (3) sowie als Vorlauf dient und mit dem Auftriebskörper (2) verbunden oder verbindbar ist, wobei ein dem Auftriebskörper (2) zugewandter, die gewünschte Schutzhöhe gewährleistender Abschnitt der Folie (4) oder Schutzplane (5) im Anwendungsfall durch den Auftrieb des Auftriebskörpers (2) an dem zu schützenden Objekt (1) selbsttätig vertikal verfahren werden kann, **dadurch gekennzeichnet, dass** (i) die funktionellen Elemente des Auftriebskörpers (2) und der Folie (4) oder Schutzplane (5) keine Mittel zur Befestigung am Objekt (1) aufweisen, sodass keines dieser Elemente des Systems zu irgendeinem Zeitpunkt seiner Anwendung fest mit dem zu schützenden Objekt (1) oder seiner Bausubstanz verbunden ist, weshalb das Objekt (1) keine Mittel zur Aufbewahrung, Führung und/oder Befestigung des Systems benötigt und daher keinerlei bauliche Veränderungen des zu schützenden Objektes (1) erforderlich sind, und dass (ii) ein dem Auftriebskörper (2) abgewandter, verbleibender Abschnitt der Folie (4) im Anwendungsfall vom zu schützenden Objekt (1) wegweisend verlegt ist.

3. System nach Anspruch 1, wobei die funktionellen Elemente der Schutzhülle (3) und der Folie (4) einteilig oder in der Ausgestaltung von zwei wasserdicht miteinander verbindbaren Systemkomponenten bereitgestellt sind.

4. System nach einem der vorhergehenden Ansprüche, wobei die funktionellen Elemente des Auftriebskörpers (2), der Folie (4) oder Schutzplane (5) und der gegebenenfalls vorhandenen Schutzhülle (3) ein Modul (6) bilden.

5. System nach Anspruch 4, wobei das dem Auftriebskörper (2) oder der Schutzhülle (3) abgewandte Ende der Folie (4) oder Schutzplane (5) eines Moduls (6) Mittel zur Fixierung der Folie (4) oder Schutzplane (5) am Boden aufweist.

6. System nach Anspruch 4 oder 5, welches zur horizontalen Verbreiterung seines Objektschutzes mehrere Module (6) umfasst, die mittels wasserdichter Schnellverschlüsse (8) miteinander verbindbar sind.

7. System nach einem der Ansprüche 4 bis 6, welches neben den funktionellen Elementen des Auftriebskörpers (2), der Folie (4) oder Schutzplane (5) und der gegebenenfalls vorhandenen Schutzhülle (3) zusätzlich ein Befestigungselement (9) umfasst, mit welchem das dem Auftriebskörper (2) oder der Schutzhülle (3) abgewandte Ende der Folie (4) oder Schutzplane (5) eines Moduls (6) im Boden fixierbar ist.

8. System nach Anspruch 7, wobei das Befestigungselement (9) als Profilschiene zur sicheren Aufnahme des dem Auftriebskörper (2) oder der Schutzhülle (3) abgewandten Endes der Folie (4) oder Schutzplane (5) ausgestaltet ist.

9. System nach Anspruch 7 oder 8, wobei das Befestigungselement (9) zur ortsfesten Fixierung einen Bodenanker (10) aufweist.

10. System nach Anspruch 9, wobei das Befestigungselement (9) im Bereich seines Bodenankers (10) eine weitere Folie (11) zum Schutz vor Unterspülung aufweist.

11. Verwendung des Systems gemäß Definition in einem der Ansprüche 1 bis 10 zum Schutz eines Objektes (1) vor Hochwasser und Überschwemmungen, wobei der Auftriebskörper (2) und die gegebenenfalls vorhandene Schutzhülle (3) sowie ein dem Auftriebskörper (2) zugewandter, die gewünschte Schutzhöhe gewährleistender Abschnitt der Folie (4) oder Schutzplane (5) im Anwendungsfall nahe des zu schützenden Objektes (1) auf den Boden gelegt und ein dem Auftriebskörper (2) abgewandter, verbleibender Abschnitt der Folie (4) oder Schutzplane (5) vom zu schützenden Objekt (1) wegweisend verlegt werden, wodurch der zur Gewährleistung einer gewünschten Schutzhöhe vorgesehene Folienabschnitt (4) durch den Auftrieb des Auftriebskörpers (2) an dem zu schützenden Objekt (1) selbsttätig vertikal verfahren werden kann.

12. Verwendung nach Anspruch 11, wobei kein Element oder keine Komponente des Systems zu irgendeinem Zeitpunkt seiner Anwendung fest mit dem zu schützenden Objekt (1) oder seiner Bausubstanz verbunden ist, weshalb das Objekt (1) keine Mittel zur Aufbewahrung, Führung und/oder Befestigung des Systems benötigt und daher keinerlei bauliche Veränderungen des zu schützenden Objektes (1) erforderlich sind.

13. Verwendung nach Anspruch 11 oder 12, wobei das dem Auftriebskörper (2) abgewandte und vom zu schützenden Objekt (1) wegweisend verlegte Ende der Folie (4) oder Schutzplane (5) in einem dem Objekt (1) vorgelagerten Bodenbereich am Boden fixiert wird.
